# EUROPEAN PATENT APPLICATION

(11) **EP 4 810 587 A1**
(43) Date of publication of application: **23.09.2026**
(21) Application number: 24891374.1
(22) Date of filing: 11.11.2024
(51) Int. Cl.: C10B 53/07, C08J 11/12

(54) **WASTE PLASTIC TREATMENT FACILITY AND WASTE PLASTIC TREATING METHOD**

(30) Priority: 14.11.2023 JP 2023193573; 14.11.2023 JP 2023193574; 14.11.2023 JP 2023193969; 14.11.2023 JP 2023193628
(71) Applicant: Nippon Steel Corporation, Tokyo 100-8071 (JP)
(72) Inventor: ISHIGAKI, Fumihiko, Tokyo 100-8071 (JP); SEKIYA, Masahiro, Tokyo 100-8071 (JP); HARADA, Tsubasa, Tokyo 100-8071 (JP); YOSHINO, Hiroyuki, Tokyo 100-8071 (JP); TSUTSUMI, Takeshi, Tokyo 100-8071 (JP); WATANABE, Masahiko, Tokyo 100-8071 (JP)
(74) Representative: Vossius & Partner Patentanwälte Rechtsanwälte mbB
(86) International application number: PCT/JP2024/039963
(87) International publication number: WO 2025/105338

(57) **Abstract**

A waste plastic processing facility includes: a pneumatic separator (10) to which waste plastic is supplied; an agglomerator (20) configured to agglomerate the waste plastic separated as a light fraction by the pneumatic separator (10); and a coke oven (30) configured such that the waste plastic separated as a heavy fraction by the pneumatic separator (10) and the waste plastic agglomerated by the agglomerator are charged into the coke oven, the coke oven being configured to pyrolyze the waste plastic.

## Description

### TECHNICAL FIELD

The present invention relates to a waste plastic processing facility and a method for processing waste plastic.

### BACKGROUND ART

A technique is known in which coal is dry-distilled in a coke oven to produce coke and, at the same time, waste plastic is pyrolyzed for recycling. For example, Patent Literature 1 describes a technique in which waste plastic is charged into a space formed near the furnace top of a coke oven and is pyrolyzed. Alternatively, waste plastic may be mixed in advance with coal to be charged into the coke oven.

### CITATION LIST

### PATENT LITERATURE(S)

Patent Literature 1: JP 2,967,329 B

### SUMMARY OF THE INVENTION

### PROBLEM(S) TO BE SOLVED BY THE INVENTION

When waste plastic is processed in a coke oven as described above, in order to prevent fine pieces of untreated waste plastic from being mixed into and discharged with exhaust gas (COG: coke oven gas), the waste plastic is charged into the coke oven after, for example, being pelletized by extrusion molding or agglomerated by thermal volume reduction. However, such an agglomeration step may become a bottleneck, potentially preventing an increase in the throughput of waste plastic.

An object of the invention is to provide a waste plastic processing facility and a method for processing waste plastic that can increase the throughput in recycling of waste plastic by pyrolysis in a coke oven, by reducing the amount of waste plastic that is agglomerated before being charged into the coke oven.

### MEANS FOR SOLVING THE PROBLEM(S)

[1] A waste plastic processing facility includes: a pneumatic separator to which waste plastic is supplied; an agglomerator configured to agglomerate the waste plastic separated as a light fraction by the pneumatic separator; and a coke oven configured such that the waste plastic separated as a heavy fraction by the pneumatic separator and the waste plastic agglomerated by the agglomerator are charged into the coke oven, the coke oven being configured to pyrolyze the waste plastic.
[2] The waste plastic processing facility according to [1], in which the coke oven is configured to dry-distill coal and to pyrolyze the waste plastic, and is configured such that the waste plastic separated as the heavy fraction and the waste plastic agglomerated by the agglomerator are charged into an empty space in the coke oven formed above the coal during dry-distillation of the coal.
[3] The waste plastic processing facility according to [1], in which the waste plastic separated as the heavy fraction and the waste plastic agglomerated by the agglomerator are charged into an empty space in the coke oven including a bottom portion of the coke oven.
[4] The waste plastic processing facility according to [1], in which the coke oven is configured to dry-distill coal and to pyrolyze the waste plastic, the waste plastic processing facility further includes a mixer configured to mix the waste plastic separated as the heavy fraction and the waste plastic agglomerated by the agglomerator into the coal, and the coal mixed with the waste plastic is charged into the coke oven.
[5] The waste plastic processing facility according to [1], in which the coke oven is configured to dry-distill coal and to pyrolyze the waste plastic, the waste plastic processing facility further includes a mixer configured to mix at least a portion of at least one of the waste plastic separated as the heavy fraction or the waste plastic agglomerated by the agglomerator into the coal, the coal mixed with at least the portion of at least one of the waste plastic separated as the heavy fraction or the waste plastic agglomerated by the agglomerator is charged into the coke oven, and the waste plastic not mixed into the coal, among the waste plastic separated as the heavy fraction and the waste plastic agglomerated by the agglomerator, is charged into an empty space in the coke oven formed above the coal mixed with at least the portion of at least one of the waste plastic separated as the heavy fraction or the waste plastic agglomerated by the agglomerator, during dry-distillation thereof.
[6] The waste plastic processing facility according to any one of [1] to [5], in which the pneumatic separator includes a vertical separation column.
[7] The waste plastic processing facility according to any one of [1] to [5], in which the agglomerator configured to agglomerate the waste plastic includes an extruder.
[8] A method for processing waste plastic, the method including: performing pneumatic separation of waste plastic to separate the waste plastic into a heavy fraction and a light fraction; agglomerating the waste plastic separated as the light fraction; and charging the waste plastic separated as the heavy fraction and the waste plastic agglomerated by the agglomerator into a coke oven, and pyrolyzing the waste plastic in the coke oven.
[9] The method for processing waste plastic according to [8], in which coal is dry-distilled and the waste plastic charged into the coke oven is pyrolyzed in the coke oven, and the waste plastic separated as the heavy fraction and the waste plastic agglomerated by the agglomerating are charged into an empty space in the coke oven formed above the coal during dry-distillation of the coal.
[10] The method for processing waste plastic according to [8], in which the waste plastic separated as the heavy fraction and the waste plastic agglomerated by the agglomerating are charged into an empty space in the coke oven including a bottom portion of the coke oven.
[11] The method for processing waste plastic according to [8], in which coal is dry-distilled and the waste plastic charged into the coke oven is pyrolyzed in the coke oven, the method further includes mixing the waste plastic separated as the heavy fraction and the waste plastic agglomerated by the agglomerating into the coal, and the coal mixed with the waste plastic is charged into the coke oven.
[12] The method for processing waste plastic according to [8], in which coal is dry-distilled and the waste plastic charged into the coke oven is pyrolyzed in the coke oven, the method further includes mixing at least a portion of at least one of the waste plastic separated as the heavy fraction or the waste plastic agglomerated by the agglomerating into the coal, the coal mixed with at least the portion of at least one of the waste plastic separated as the heavy fraction or the waste plastic agglomerated by the agglomerating is charged into the coke oven, and the waste plastic not mixed into the coal, among the waste plastic separated as the heavy fraction and the waste plastic agglomerated by the agglomerating, is charged into an empty space in the coke oven formed above the coal mixed with at least the portion of at least one of the waste plastic separated as the heavy fraction or the waste plastic agglomerated by the agglomerating, during dry-distillation thereof.
[13] The method for processing waste plastic according to any one of [8] to [12], in which the coke oven includes an ascension pipe through which furnace gas is discharged, and the method further includes: calculating a drag force acting on suspended matter in the ascension pipe based on measurement results of a gas temperature, a gas flow velocity, and a gas composition in the ascension pipe; and setting an airflow velocity in the pneumatic separation such that a drag force identical to that in the ascension pipe acts on the waste plastic.

### BRIEF DESCRIPTION OF DRAWINGS

Fig. 1 illustrates an overall configuration of a waste plastic processing facility according to a first exemplary embodiment of the invention.
Fig. 2 is an enlarged view of a pneumatic separator illustrated in Fig. 1.
Fig. 3 is an enlarged view of a coke oven illustrated in Fig. 1.
Fig. 4 illustrates an overall configuration of a waste plastic processing facility according to a second exemplary embodiment of the invention.
Fig. 5 is an enlarged view of a coke oven illustrated in Fig. 4.
Fig. 6 illustrates an overall configuration of a waste plastic processing facility according to a third exemplary embodiment of the invention.
Fig. 7 is an enlarged view of a coke oven illustrated in Fig. 6.
Fig. 8 illustrates an overall configuration of a waste plastic processing facility according to a fourth exemplary embodiment of the invention.
Fig. 9 illustrates a modified example of the waste plastic processing facility illustrated in Fig. 8.
Fig. 10 is an enlarged view of a coke oven illustrated in Fig. 9.
Fig. 11 is a graph showing recovery rates at respective flow velocities in pneumatic separation of Example.
Fig. 12 is a graph showing measurement results of thicknesses of waste plastic separated by the pneumatic separation of the Example.
Fig. 13 illustrates simulation results of scattering behavior in the coke oven.

### DESCRIPTION OF EMBODIMENT(S)

Referring to the accompanying drawings, preferred exemplary embodiments of the invention will be described in detail below. In the specification and the drawings, components having substantially the same functional configuration are denoted by the same reference numerals, and redundant descriptions thereof are omitted.

### First Exemplary Embodiment

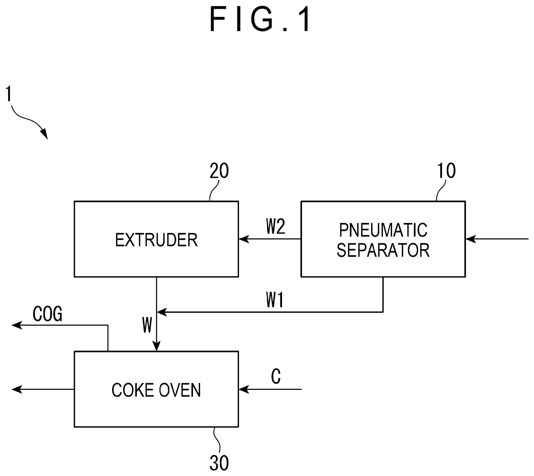

Fig. 1 illustrates an overall configuration of a waste plastic processing facility according to a first exemplary embodiment of the invention. Herein, "waste plastic" refers to plastic-based waste having plastics as a principal component. Examples of such plastics include polystyrene (PS), polyethylenes (PE), polypropylene (PP), polyethylene terephthalate (PET), polyvinyl chloride (PVC), and polyvinylidene chloride (PVDC). In the illustrated example, a processing facility 1 includes: a pneumatic separator 10 to which waste plastic is supplied; an extruder 20 serving as a means for agglomerating the waste plastic separated as a light fraction W2 by the pneumatic separator 10; and a coke oven 30 into which waste plastic W is charged, the waste plastic W including the waste plastic separated as a heavy fraction W1 by the pneumatic separator 10 and the waste plastic agglomerated by the extruder 20. As described below, the waste plastic W is charged into an empty space formed above coal C in the coke oven during dry-distillation of the coal C in the first exemplary embodiment. Volatile products, including combustible gas, tar, light oil, and the like, generated by dry-distillation (pyrolysis) of the coal C and the waste plastic W are recovered as coke oven gas (COG), and solid coke is discharged from the coke oven 30 after completion of the dry-distillation.

It should be noted that, as a means for supplying the waste plastic separated by the pneumatic separator 10 to the extruder 20, means for charging coal and waste plastic into the coke oven 30, and means for recovering and discharging gases and solids generated in the coke oven 30, components used in known waste plastic processing facilities, such as a coal charging car, a conveyor, a hopper, or a feeder, may be employed as appropriate; therefore, a detailed description thereof is omitted. Further, the extruder 20 is an exemplary means for agglomerating waste plastic. For example, a screw-type extruder kneads waste plastic to generate heat while compressing the waste plastic, thereby welding the waste plastic pieces to each other. In addition, various devices that are used for agglomeration or pelletization of waste plastic may be employed for agglomerating the waste plastic, such as thermal volume-reduction using a furnace such as a rotary kiln.

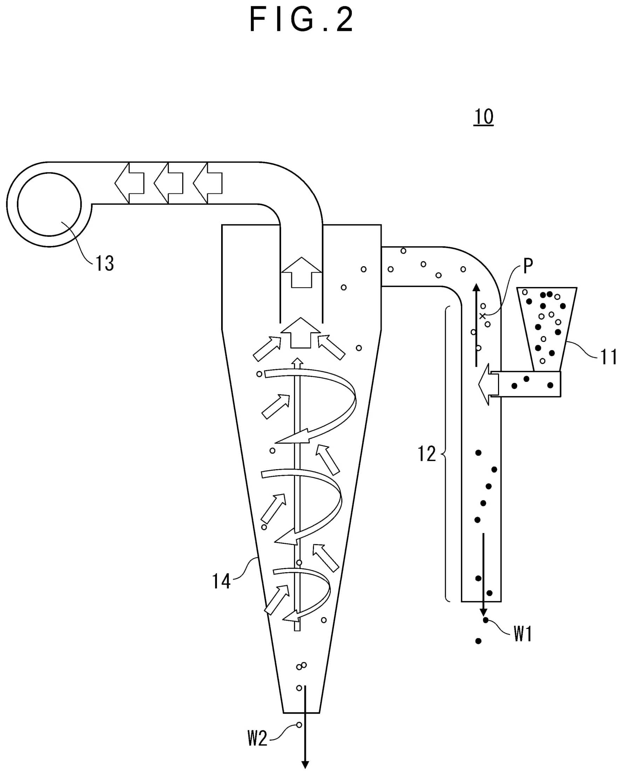

Fig. 2 is an enlarged view of the pneumatic separator illustrated in Fig. 1. In the illustrated example, the pneumatic separator 10 includes a vertical separation column 12. A pneumatic separator in an exemplary embodiment of the invention is not necessarily limited to one having a vertical separation column; however, when the pneumatic separator has the vertical separation column, it has an advantage of high classification (separation) accuracy. In the pneumatic separator 10, waste plastic is fed into the separation column 12 by a feeder 11 and is separated into the heavy fraction W1 and the light fraction W2 by an airflow that is generated in the separation column 12 by operation of a suction blower 13. The heavy fraction W1 falls within the separation column 12 and is recovered. The light fraction W2 is lifted by the airflow within the separation column 12 and is recovered after being separated from the airflow in a cyclone chamber 14. Here, as described above, the waste plastic separated as the heavy fraction W1 is charged into the coke oven 30 without being agglomerated. Therefore, the airflow velocity in the separation column 12 needs to be set such that the untreated waste plastic separated as the heavy fraction W1 is prevented from entering a COG recovery process line after being charged into the coke oven 30. In the first exemplary embodiment, the flow velocity at a position P of the separation column 12 above an outlet of the feeder 11 is set by a calculation method described below.

Herein, waste plastic is described as being separated into the heavy fraction W1 and the light fraction W2 by pneumatic separation; however, the terms "heavy fraction" and "light fraction" do not necessarily mean that the waste plastic as the heavy fraction and the waste plastic as the light fraction differ in specific gravity. The waste plastic as the heavy fraction and the waste plastic as the light fraction may, for example, have the same specific gravity in terms of material; however, due to differences in dimensions such as thickness after crushing, the waste plastic pieces are separated by pneumatic separation into the heavy fraction that falls and the light fraction that is blown off and recovered.

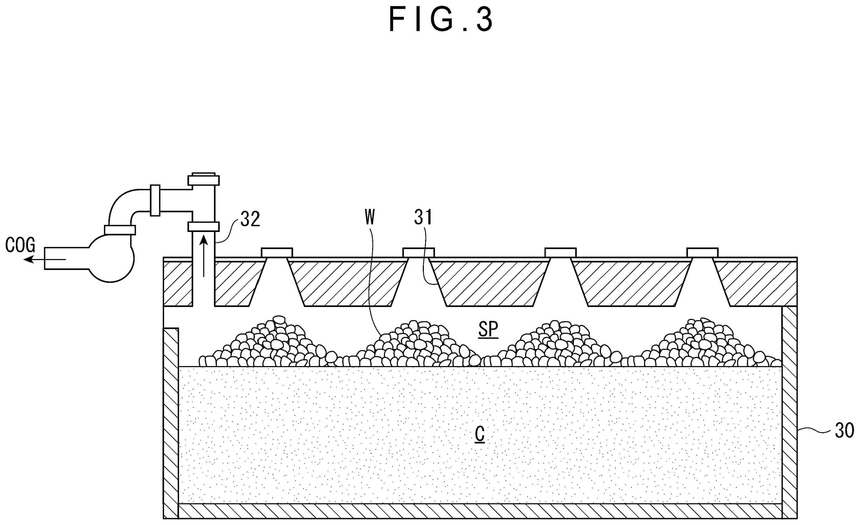

Fig. 3 is an enlarged view of the coke oven illustrated in Fig. 1. The coke oven 30 is a furnace for producing coke by dry-distilling the charged coal C. The waste plastic W is charged through at least one charging port 31 at the furnace top into an empty space SP formed above the coal C during dry-distillation of the coal C. The empty space SP above the coal C is formed as the coal C is dry-distilled in the coke oven 30 and shrinks. Therefore, charging of the waste plastic W into the coke oven 30 is carried out after a predetermined period of time has elapsed from the start of dry-distillation of the coal C in the coke oven 30. Volatile products, including combustible gas, tar, light oil, and the like, generated by dry-distillation (pyrolysis) of the coal C and the waste plastic W are recovered as COG via an ascension pipe 32.

As a matter common to the exemplary embodiments described below, during processing in the coke oven 30 as described above, if the waste plastic W that has not yet been pyrolyzed is entrained in an upward gas flow in the furnace and rises within the ascension pipe 32, the waste plastic W may enter a gas recovery and processing line downstream of the ascension pipe 32, affecting the quality of recovered products such as light oil and/or causing clogging in components such as nozzles. As described above, in the first exemplary embodiment, the waste plastic separated as the light fraction W2 by the pneumatic separator 10 is charged into the coke oven 30 after being agglomerated, so that scattering of the waste plastic within the coke oven 30 can be reduced. Further, as described below, by setting the airflow velocity in the pneumatic separator 10 within a range in which the waste plastic separated as the heavy fraction W1 does not rise within the ascension pipe 32, the above-described adverse effects due to scattering of the waste plastic can be reduced more reliably.

### Second Exemplary Embodiment

Subsequently, a second exemplary embodiment of the invention will be described. A coke oven is typically constructed as a coke oven battery in which a large number of ovens (carbonization chambers) and combustion chambers for heating these ovens are alternately arranged. However, only some ovens in the battery may, for example due to aging, be rendered unsuitable for producing coke. Even such ovens are heated together with adjacent ovens, which may be wasteful from the standpoint of energy efficiency. In addition, depending on the supply-and-demand situation for coke, it may not be necessary to produce coke in all of the battery ovens. Accordingly, in the second exemplary embodiment, a coke oven that is not producing coke for reasons such as those described above is effectively utilized to increase the throughput of waste plastic.

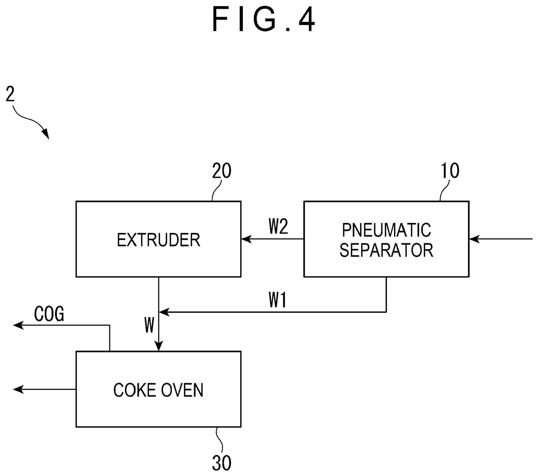

Fig. 4 illustrates an overall configuration of a waste plastic processing facility according to the second exemplary embodiment of the invention. In the illustrated example, a processing facility 2 includes: the pneumatic separator 10 to which waste plastic is supplied; the extruder 20 serving as a means for agglomerating the waste plastic separated as the light fraction W2 by the pneumatic separator 10; and the coke oven 30 into which waste plastic W is charged, the waste plastic W including the waste plastic separated as the heavy fraction W1 by the pneumatic separator 10 and the waste plastic agglomerated by the extruder 20. No coal is charged into the coke oven 30 of the second exemplary embodiment. Volatile products, including combustible gas, tar, light oil, and the like, generated by dry-distillation (pyrolysis) of the waste plastic W in the coke oven 30 are recovered in the same manner as coke oven gas (COG) generated in producing coke, and solid matter is discharged from the coke oven 30 after completion of the dry-distillation.

Similar to the other exemplary embodiments, as a means for supplying the waste plastic separated by the pneumatic separator 10 to the extruder 20, means for charging waste plastic into the coke oven 30, and means for recovering and discharging gases and solids generated in the coke oven 30, components used in known waste plastic processing facilities, such as a conveyor, a hopper, or a feeder, may be employed as appropriate; therefore, a detailed description thereof is omitted. Further, the extruder 20 is an exemplary means for agglomerating waste plastic. For example, a screw-type extruder kneads waste plastic to generate heat while compressing the waste plastic, thereby welding the waste plastic pieces to each other. In addition, various devices that are used for agglomeration or pelletization of waste plastic may be employed for agglomerating the waste plastic, such as thermal volume-reduction using a furnace such as a rotary kiln.

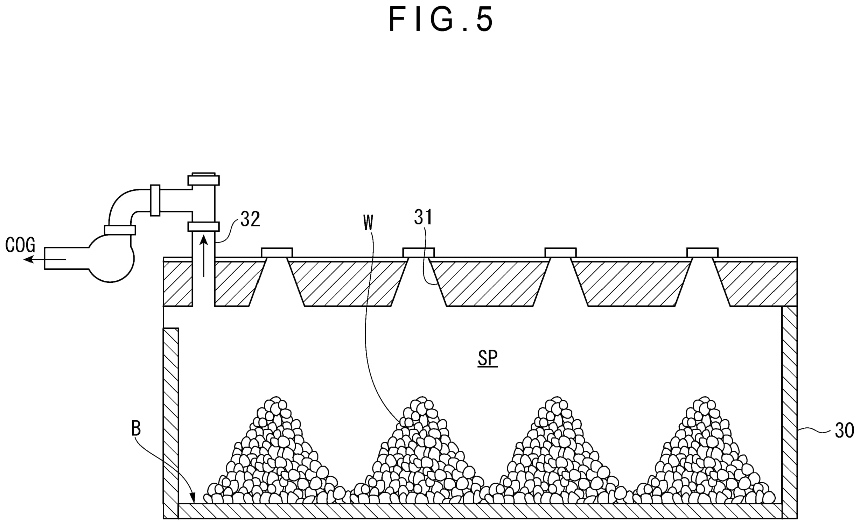

Fig. 5 is an enlarged view of the coke oven illustrated in Fig. 4. The coke oven 30 is originally a furnace for producing coke by dry-distilling charged coal; however, in the illustrated example, the coke oven 30 is not producing coke, for example due to aging and/or a supply-and-demand situation, and therefore no coal is charged. In the coke oven 30, the waste plastic W is charged into the furnace through at least one charging port 31 at the furnace top. Since no coal is charged, the waste plastic W is charged into an empty space SP including a bottom portion B of the coke oven 30. As described above, since coke is not produced only in some of the ovens in the battery, in the other ovens, waste plastic may be charged together with coal and subjected to pyrolysis. The timing at which the waste plastic W is charged into the coke oven 30 of the second exemplary embodiment is not particularly limited. For example, when other coke ovens in the battery that are producing coke also perform pyrolysis of waste plastic, the waste plastic W may be charged into the coke oven 30 in synchronization with the charging of waste plastic into the empty space in each of the other ovens formed as the coal dry-distills and shrinks. Volatile products, including combustible gas, tar, light oil, and the like, generated by dry-distillation (pyrolysis) of the waste plastic W are recovered in the same manner as COG via the ascension pipe 32.

The empty space SP in the coke oven 30 into which the waste plastic W is charged as described above is larger than the empty space formed above the coal during dry-distillation thereof in other coke ovens producing coke; therefore, the amount of the waste plastic W charged into the coke oven 30 may be increased as compared with the other coke ovens. In this case, for example, the amount of the waste plastic W charged through the charging port 31 at the furnace top may be increased, or the waste plastic W may be charged through a line (not illustrated) that is used for charging coal in other ovens, in addition to or instead of the charging port 31. It should be noted that, even when the same amount of the waste plastic W as that charged into other coke ovens producing coke is charged into the coke oven 30 that is not producing coke, the throughput of waste plastic is increased as compared with a case in which an oven that is not producing coke is not used for processing waste plastic. Accordingly, the amount of the waste plastic W charged into the coke oven 30 is not necessarily limited to an amount greater than that charged into other coke ovens producing coke in an exemplary embodiment of the invention.

### Third Exemplary Embodiment

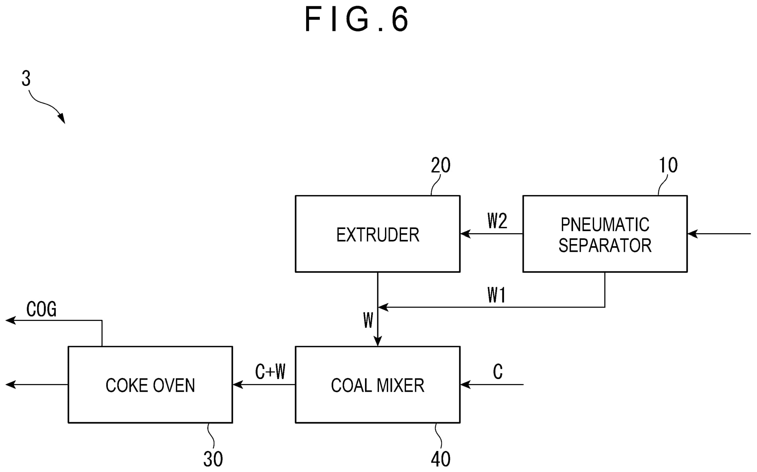

Fig. 6 illustrates an overall configuration of a waste plastic processing facility according to an exemplary embodiment of the invention. In the illustrated example, a processing facility 3 includes: the pneumatic separator 10 to which waste plastic is supplied; the extruder 20 serving as a means for agglomerating the waste plastic separated as the light fraction W2 by the pneumatic separator 10; a coal mixer 40 serving as a means for mixing, into the coal C, the waste plastic W including the waste plastic separated as the heavy fraction W1 by the pneumatic separator 10 and the waste plastic agglomerated by the extruder 20; and the coke oven 30 into which coal (C + W) containing the waste plastic is charged. Volatile products, including combustible gas, tar, light oil, and the like, generated by dry-distillation (pyrolysis) of the coal C and the waste plastic W are recovered as coke oven gas (COG), and solid coke is discharged from the coke oven 30 after completion of the dry-distillation.

Similar to the other exemplary embodiments, as a means for supplying the waste plastic separated by the pneumatic separator 10 to the extruder 20, means for supplying waste plastic to the coal mixer 40, means for charging the coal containing waste plastic into the coke oven 30, and means for recovering and discharging gases and solids generated in the coke oven 30, components used in known waste plastic processing facilities, such as a coal charging car, a conveyor, a hopper, or a feeder, may be employed as appropriate; therefore, a detailed description thereof is omitted. Further, the extruder 20 is an exemplary means for agglomerating waste plastic. For example, a screw-type extruder kneads waste plastic to generate heat while compressing the waste plastic, thereby welding the waste plastic pieces to each other. In addition, various devices that are used for agglomeration or pelletization of waste plastic may be employed for agglomerating the waste plastic, such as thermal volume-reduction using a furnace such as a rotary kiln.

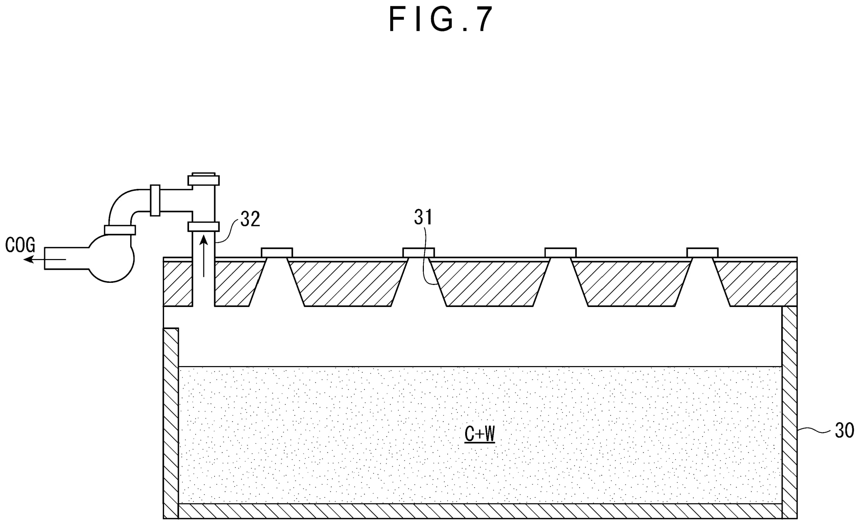

Fig. 7 is an enlarged view of the coke oven illustrated in Fig. 6. The coke oven 30 is a furnace for producing coke by dry-distilling charged coal C; however, in the third exemplary embodiment, the waste plastic W is mixed in advance with the coal C as described above (C + W). For example, when it is necessary to increase the throughput of waste plastic, additional waste plastic (not illustrated in Fig. 6) may be charged into an empty space formed above the coal C during dry-distillation of the coal C and the waste plastic W, through at least one charging port 31 at the furnace top. This additional charging of the waste plastic is carried out after a predetermined period of time has elapsed from the start of dry-distillation of the coal C in the coke oven 30. Volatile products, including combustible gas, tar, light oil, and the like, generated by dry-distillation (pyrolysis) of the coal C and the waste plastic W are recovered as COG via the ascension pipe 32.

### Fourth Exemplary Embodiment

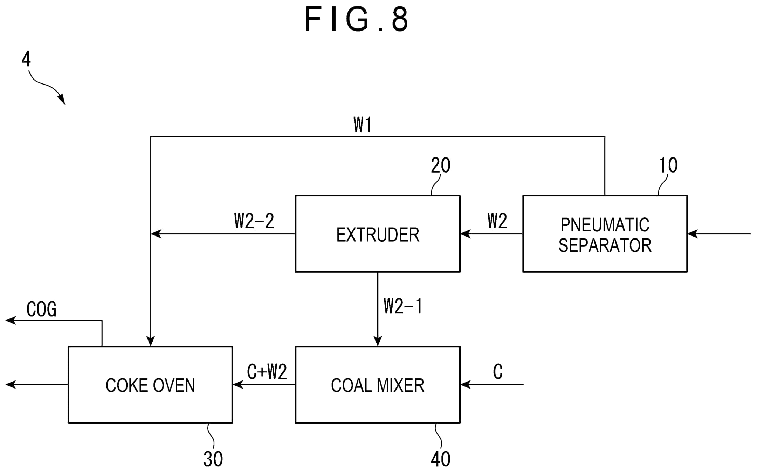

Fig. 8 illustrates an overall configuration of a waste plastic processing facility according to a fourth exemplary embodiment of the invention. In the illustrated example, a processing facility 4 includes: the pneumatic separator 10 to which waste plastic is supplied; the extruder 20 serving as a means for agglomerating the waste plastic separated as the light fraction W2 by the pneumatic separator 10; the coal mixer 40 serving as a means for mixing, into the coal C, a portion (W2-1) of the waste plastic agglomerated by the extruder 20; and the coke oven 30 into which coal (C + W2) containing the waste plastic and the waste plastic not mixed into the coal are separately charged. The waste plastic not mixed into the coal is, specifically, the waste plastic separated as the heavy fraction W1 by the pneumatic separator 10 and the remainder (W2-2) of the waste plastic agglomerated by the extruder 20. The waste plastic separated as the heavy fraction W1 and the remainder (W2-2) of the waste plastic agglomerated by the extruder 20 are charged into the empty space formed above the coal C during dry-distillation of the mixture (C + W2) of the coal and the waste plastic. Volatile products, including combustible gas, tar, light oil, and the like, generated by dry-distillation (pyrolysis) of the coal C and the waste plastic W are recovered as coke oven gas (COG), and solid coke is discharged from the coke oven 30 after completion of the dry-distillation.

Similar to the other exemplary embodiments, as a means for supplying the waste plastic separated by the pneumatic separator 10 to the extruder 20, means for supplying waste plastic to the coal mixer 40, means for charging, into the coke oven 30, the coal containing the waste plastic and the waste plastic not mixed into the coal, and means for recovering and discharging gases and solids generated in the coke oven 30, components used in known waste plastic processing facilities, such as a coal charging car, a conveyor, a hopper, or a feeder, may be employed as appropriate; therefore, a detailed description thereof is omitted. Further, the extruder 20 is an exemplary means for agglomerating waste plastic. For example, a screw-type extruder kneads waste plastic to generate heat while compressing the waste plastic, thereby welding the waste plastic pieces to each other. In addition, various devices that are used for agglomeration or pelletization of waste plastic may be employed for agglomerating the waste plastic, such as thermal volume-reduction using a furnace such as a rotary kiln.

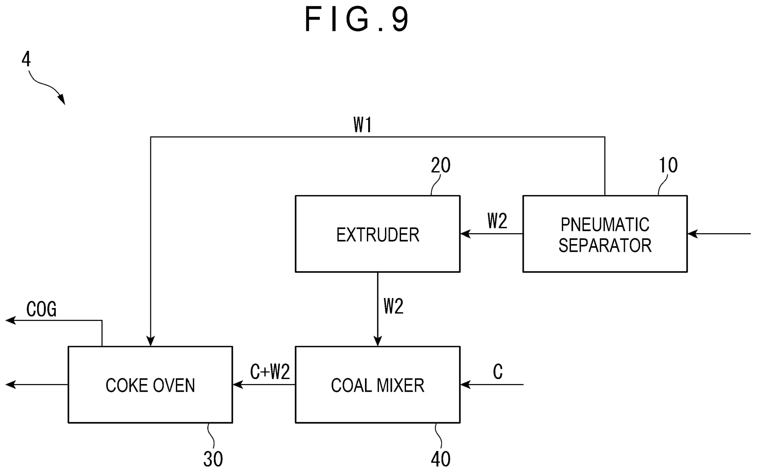

Fig. 9 illustrates a modified example of the waste plastic processing facility illustrated in Fig. 8. In the illustrated example, the entirety of the waste plastic W2 agglomerated by the extruder 20 is mixed into coal C by the coal mixer 40. In this case, only the waste plastic separated as the heavy fraction W1 by the pneumatic separator 10 is directly charged into the coke oven 30 without being mixed into coal. For example, when the proportion of the heavy fraction W1 in the waste plastic delivered to the processing facility 1 is higher than in the example of Fig. 8, the charging method into the coke oven 30 may be differentiated in this manner between the heavy fraction W1 and the agglomerated waste plastic W2.

In other exemplary embodiments, contrary to the examples illustrated in Figs. 8 and 9, a portion of the heavy fraction W1 may be mixed into the coal C and the remainder of the heavy fraction W1 and the agglomerated waste plastic W2 may be directly charged into the coke oven 30, or the entirety of the heavy fraction W1 may be mixed into the coal C and the agglomerated waste plastic W2 may be directly charged into the coke oven 30. Alternatively, after the heavy fraction W1 and the agglomerated waste plastic W2 are mixed together, the mixture may be divided into a portion to be mixed into the coal C and a portion to be directly charged into the coke oven 30. As described above, in an exemplary embodiment of the invention, the heavy fraction W1 and/or the agglomerated waste plastic W2 are partially mixed into the coal C, and the remainder not mixed into the coal C is directly charged into the coke oven 30. However, whether the waste plastic in each charging method includes the heavy fraction W1 and/or the agglomerated waste plastic W2 and, if included, the proportion thereof is not particularly limited. That is, in the present exemplary embodiment, at least a portion of at least one of the waste plastic separated as the heavy fraction W1 by the pneumatic separator 10 or the agglomerated waste plastic W2 is mixed into the coal C by the coal mixer 40.

The third exemplary embodiment described above with reference to Fig. 6 and the fourth exemplary embodiment can be selectively used, for example, depending on a required throughput of waste plastic. For example, when the throughput of waste plastic is small, in the configuration of Fig. 6, the entire amounts of the heavy fraction W1 and the agglomerated waste plastic are mixed into the coal C. This eliminates the procedure of charging the waste plastic after starting dry-distillation of the coal C in the coke oven 30. When the throughput of waste plastic increases and exceeds an upper limit of an amount to be mixed into the coal C, the upper limit being set to ensure coke quality, the configuration of Fig. 8 or Fig. 9 may be employed, and waste plastic exceeding the upper limit may be charged into the empty space formed above the coal during dry-distillation of the mixture of coal and waste plastic, thereby maximizing the throughput of waste plastic.

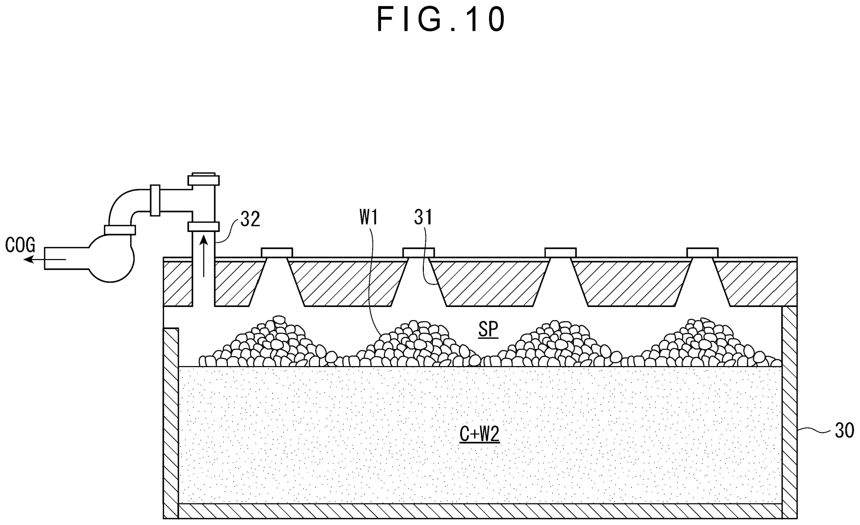

Fig. 10 is an enlarged view of the coke oven illustrated in Fig. 9. As in the other exemplary embodiments, the coke oven 30 is a furnace for producing coke by dry-distilling the charged coal C. For convenience, description is given using the example of Fig. 9 in which charging methods are differentiated between the heavy fraction W1 and the agglomerated waste plastic W2; however, the same applies to other examples such as that of Fig. 8. In the example of Fig. 9, as described above, the waste plastic W2 is mixed in advance with the coal C (C + W2). Further, the waste plastic W1 is charged through at least one charging port 31 at the furnace top into the empty space SP formed above the coal C during dry-distillation of the mixture of the coal C and the waste plastic W2. The empty space SP is formed as the coal C and the waste plastic W2 are dry-distilled in the coke oven 30 and shrink. Accordingly, charging of the waste plastic W1 through the charging port 31 is carried out after a predetermined period of time has elapsed from the start of dry-distillation of the coal C in the coke oven 30. Volatile products, including combustible gas, tar, light oil, and the like, generated by dry-distillation (pyrolysis) of the coal C and the waste plastic W are recovered as COG via the ascension pipe 32.

In the following, a calculation method for an airflow velocity in a pneumatic separator, which is applicable in an exemplary embodiment of the invention, will be described. A drag force r_{f} (Pa) acting on suspended matter in a gas flow is given by Equation (1) below using a drag coefficient c_{D}, a gas density ρ_{f} (kg/m³), and a gas flow velocity v (m/s). The drag coefficient c_{D} is given by Equation (2) below using a particle Reynolds number Re, and the particle Reynolds number Re is given by Equation (3) below using the gas density ρ_{f} (kg/m³), the gas flow velocity v (m/s), a gas viscosity µ (Pa·s), and a characteristic length d (mm) that is a thickness of the waste plastic.
[Equation 1] ${r}_{f} = {c}_{D} \left(\frac{{ρ}_{f} {v}^{2}}{2}\right)$ ${c}_{D} = \left\{\begin{matrix}\frac{24}{Re} & \left(Re\leq 2\right) \\ \frac{10}{\sqrt{Re}} & \left(2<Re\leq 500\right) \\ 0.44 & \left(500<Re\leq {10}^{5}\right)\end{matrix}\right.$ $Re = \frac{{ρ}_{f} vd}{μ}$

Based on measurement results of the temperature, flow velocity, and composition of the gas in the ascension pipe 32 of the coke oven 30, the drag coefficient c_{D} can be calculated using Equations (2) and (3), and the drag force r_{f} can be calculated using Equation (1). A measurement port was provided in the ascension pipe 32, and the gas flow velocity was measured by performing a flow velocity measurement by inserting, through the measurement port, a flow velocity meter such as a Pitot tube. The gas temperature (air temperature) was measured by providing a thermocouple on the Pitot tube. Regarding the gas composition, the gas was drawn through the Pitot tube after completion of the flow velocity measurement, collected into a gas bag, and its composition was quantified by gas chromatography. The measurement position was set at a center of the pipe. Once the drag force r_{f} acting on suspended matter in the ascension pipe 32 of the coke oven 30 has been calculated in this manner, the gas flow velocity v (m/s) at which the same drag force r_{f} acts on powder in air at room temperature (20 degrees C) can be calculated by substituting values for air at room temperature (20 degrees C) into Equations (1) to (3). In the above example, the rotational speed of the suction blower 13 is set so that this gas flow velocity v (m/s) is obtained at the upper position P of the separation column 12 of the pneumatic separator 10. This makes it possible for the pneumatic separator 10 to separate, as the heavy fraction W1, waste plastic that is unlikely to rise within the ascension pipe 32 in the coke oven 30 without performing agglomeration.

In an exemplary embodiment of the invention as described above, waste plastic is subjected in advance to pneumatic separation, and the waste plastic separated as the heavy fraction W1 is charged into the coke oven 30 without being agglomerated. Accordingly, agglomeration by the extruder 20 is performed only for the waste plastic separated as the light fraction W2 by pneumatic separation. This reduces the amount of waste plastic to be agglomerated before being charged into the coke oven, thereby making it possible to increase the throughput of waste plastic without being limited by the processing capacity of an agglomeration step. More specifically, the throughput of waste plastic is less likely to be constrained by the processing speed of the extruder 20. Meanwhile, since the waste plastic separated as the light fraction W2 is agglomerated, adverse effects due to scattering of waste plastic within the coke oven 30 are reduced. Further, setting the airflow velocity in the pneumatic separation as described above can more reliably prevent the entry of the untreated waste plastic W into the gas-recovery process line.

It should be noted that, in other exemplary embodiments, various types of pneumatic separators other than the pneumatic separator 10 exemplified as an exemplary embodiment may be used. For example, the pneumatic separator is not limited to one having the vertical separation column 12 as in the above example, and may instead be configured to separate a heavy fraction and a light fraction using a horizontal or oblique airflow. Based on the drag force r_{f} in the ascension pipe 32 of the coke oven 30 calculated as described above, it is possible to perform pneumatic separation by setting, depending on specifications of the pneumatic separator, conditions equivalent to the calculated drag force r_{f}.

### Example

A description will be made below about experimental results for verifying the effects of the exemplary embodiments of the invention described above. In the experiment, crushed pieces of waste plastic collected separately as general waste were subjected to pneumatic separation using a suction-type pneumatic separator (MHV-215, manufactured by Harashima Electronic Machine Industry Co., Ltd.), and the thickness of waste plastic pieces separated as the heavy fraction was measured. For the thickness measurement, calipers were used; thickness measurements were carried out at two to three locations for each sample piece, and an average value thereof was adopted. Further, the scattering behavior in a coke oven of the waste plastic pieces whose thickness was measured was analyzed by simulation.

Table 1 shows the calculation conditions and results for the airflow velocity in the pneumatic separator; specifically, measurement results of the temperature, velocity, and composition of the gas in the ascension pipe of the coke oven, and results calculated under those conditions using Equations (1) to (3) above. The characteristic length d in Equation (3) was set to 1 mm. The gas flow velocity v that produces a drag force equivalent to the calculated drag force r_{f} in air at room temperature (20 degrees C) was 5.0 m/s.

### Table 1

**Table 1: Calculation conditions for airflow velocity**

| | | | |
|---|---|---|---|
| Gas temperature | | °C | 1,022 |
| Gas flow velocity v | | m/s | 7 |
| Gas density ρ_{f} | | kg/m³ | 0.172064 |
| Gas viscosity µ | | Pa·s | 4.25447E-05 |
| Gas composition | CO | vol% | 7.7 |
| | CO₂ | vol% | 5.8 |
| | H₂ | vol% | 26.4 |
| | N₂ | vol% | 28.7 |
| | CH₄ | vol% | 21.0 |
| | C₂H₄ | vol% | 4.0 |
| | C₂H₆ | vol% | 1.3 |
| | H₂O | vol% | 5.2 |
| Particle Reynolds number Re | | - | 29.40167 |
| Drag Coefficient c_{D} | | - | 1.844225 |
| Drag force r_{f} | | Pa | 8.072998 |

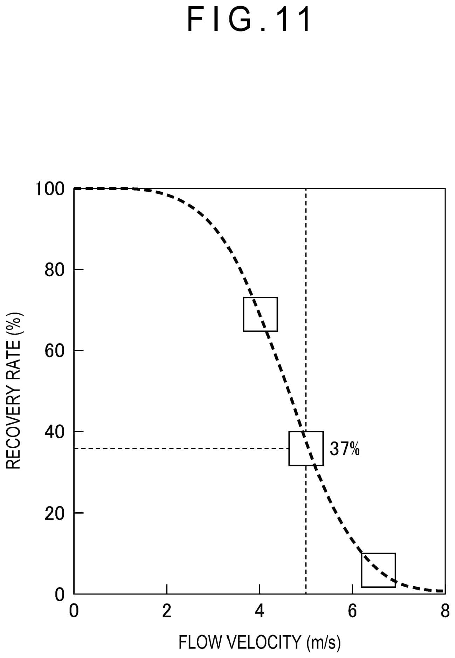

Fig. 11 is a graph showing recovery rates at respective flow velocities in the pneumatic separation of Example. Pneumatic separation was performed while the rotational speed of a suction blower was set such that the flow velocity at an upper position of a separation column of the pneumatic separator took one of three values: 4.0 m/s, 5.0 m/s, and 6.5 m/s. As a result, a correlation was observed between the flow velocity and the proportion (recovery rate) of waste plastic separated by falling as a heavy fraction, and the recovery rate at the calculated flow velocity of 5.0 m/s (i.e., fallen weight/charged weight) was 37%. In other words, in this experiment, if a flow-velocity setting of 5.0 m/s is appropriate, 37% of the waste plastic can be separated as material that can be charged into the coke oven without undergoing an agglomeration step.

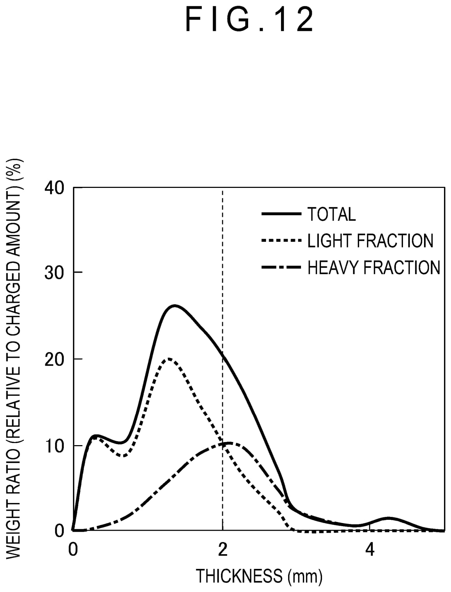

Fig. 12 is a graph showing measurement results of thicknesses of waste plastic separated by the pneumatic separation of the Example. In the graph, thickness distributions are shown, in terms of a weight ratio relative to a charged amount, for the total of the waste plastic charged into the pneumatic separator, the waste plastic separated as the light fraction, and the waste plastic separated as the heavy fraction. The waste plastic separated as the heavy fraction exhibits a thickness distribution that is clearly different from that of the total of the charged waste plastic and that of the light-fraction waste plastic, and shows a distribution having a median thickness of 2 mm, which is thicker than the total of the charged waste plastic.

Further, in the measurement results described above, the minimum thickness of the waste plastic separated as the heavy fraction was 0.2 mm. Accordingly, if waste plastic having a thickness of 0.2 mm that has scattered in the coke oven does not rise to the ascension pipe, the flow-velocity of 5.0 m/s set in the pneumatic separator in the experiment described above is appropriate, and it can be considered that the pneumatic separator is capable of appropriately separating, even without undergoing an agglomeration step, waste plastic that is unlikely to rise within the ascension pipe in the coke oven.

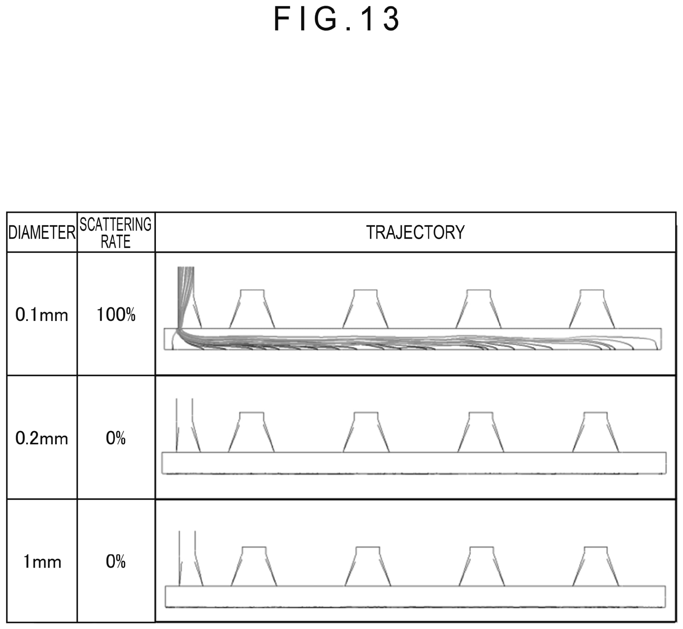

Fig. 13 illustrates simulation results of scattering behavior in the coke oven. In the simulation, the state of the gas flow in the coke oven was first calculated, and then, based on the resulting flow field, the scattering trajectories of plastic particles having predetermined dimensions were calculated. The plastic particles were assumed to be spherical particles, and the particle diameter was set to one of three values: 0.1 mm, 0.2 mm, and 1 mm. As a result, when the particle diameter was 0.1 mm, substantially all particles scattered and rose within the ascension pipe. In contrast, when the particle diameter was 0.2 mm or 1 mm, substantially no particles scattered; consequently, no particles entered the ascension pipe.

From the simulation results described above, it was considered that, for waste plastic having a thickness of 0.2 mm or greater, the likelihood of rising within the ascension pipe in the coke oven is low even without undergoing an agglomeration step. Accordingly, it can be seen that, in the experiment described above, waste plastic that does not require agglomeration can be appropriately separated with the flow-velocity setting of 5.0 m/s in the pneumatic separator. In the example described above of waste plastic separately collected as general waste, pneumatic separation eliminates the need for the agglomeration step for 37% of the total. Consequently, the throughput of waste plastic is significantly increased, as it is not constrained by the processing capacity of the agglomeration step.

As described above with respect to the exemplary embodiments of the invention, the airflow velocity in the pneumatic separator is calculated in accordance with specifications of the coke oven and the pneumatic separator, and therefore is not limited to the numerical values of the Example described above. Further, the thickness of the waste plastic separated as the heavy fraction also varies depending on, for example, the airflow velocity; therefore, it is not limited to the numerical values of the Example described above. For example, when the gas flow velocity in the coke oven is small, plastic particles are less likely to scatter even when the particles are thinner. Therefore, by setting the airflow velocity in the pneumatic separator to be smaller, waste plastic thinner than 0.2 mm may be separated as the heavy fraction.

### EXPLANATION OF CODES

1, 2, 3, 4...processing facility, 10...pneumatic separator, 11...feeder, 12...separation column, 13...suction blower, 14...cyclone chamber, 20...extruder, 30...coke oven, 31...charging port, 32...ascension pipe, 40...coal mixer, W...waste plastic, W1...heavy fraction, W2...light fraction, C...coal, SP...empty space.

## Claims

1. A waste plastic processing facility, comprising:
a pneumatic separator to which waste plastic is supplied;
an agglomerator configured to agglomerate the waste plastic separated as a light fraction by the pneumatic separator; and
a coke oven configured such that the waste plastic separated as a heavy fraction by the pneumatic separator and the waste plastic agglomerated by the agglomerator are charged into the coke oven, the coke oven being configured to pyrolyze the waste plastic.

2. The waste plastic processing facility according to claim 1, wherein the coke oven is configured to dry-distill coal and to pyrolyze the waste plastic, and is configured such that the waste plastic separated as the heavy fraction and the waste plastic agglomerated by the agglomerator are charged into an empty space in the coke oven formed above the coal during dry-distillation of the coal.

3. The waste plastic processing facility according to claim 1, wherein the waste plastic separated as the heavy fraction and the waste plastic agglomerated by the agglomerator are charged into an empty space in the coke oven including a bottom portion of the coke oven.

4. The waste plastic processing facility according to claim 1, wherein the coke oven is configured to dry-distill coal and to pyrolyze the waste plastic,
the waste plastic processing facility further comprises a mixer configured to mix the waste plastic separated as the heavy fraction and the waste plastic agglomerated by the agglomerator into the coal, and
the coal mixed with the waste plastic is charged into the coke oven.

5. The waste plastic processing facility according to claim 1, wherein the coke oven is configured to dry-distill coal and to pyrolyze the waste plastic,
the waste plastic processing facility further comprises a mixer configured to mix at least a portion of at least one of the waste plastic separated as the heavy fraction or the waste plastic agglomerated by the agglomerator into the coal,
the coal mixed with at least the portion of at least one of the waste plastic separated as the heavy fraction or the waste plastic agglomerated by the agglomerator is charged into the coke oven, and
the waste plastic not mixed into the coal, among the waste plastic separated as the heavy fraction and the waste plastic agglomerated by the agglomerator, is charged into an empty space in the coke oven formed above the coal mixed with at least the portion of at least one of the waste plastic separated as the heavy fraction or the waste plastic agglomerated by the agglomerator, during dry-distillation thereof.

6. The waste plastic processing facility according to any one of claims 1 to 5, wherein the pneumatic separator includes a vertical separation column.

7. The waste plastic processing facility according to any one of claims 1 to 5, wherein the agglomerator configured to agglomerate the waste plastic includes an extruder.

8. A method for processing waste plastic, the method comprising:
performing pneumatic separation of waste plastic to separate the waste plastic into a heavy fraction and a light fraction;
agglomerating the waste plastic separated as the light fraction; and
charging the waste plastic separated as the heavy fraction and the waste plastic agglomerated by the agglomerator into a coke oven, and pyrolyzing the waste plastic in the coke oven.

9. The method for processing waste plastic according to claim 8, wherein
coal is dry-distilled and the waste plastic charged into the coke oven is pyrolyzed in the coke oven, and
the waste plastic separated as the heavy fraction and the waste plastic agglomerated by the agglomerating are charged into an empty space in the coke oven formed above the coal during dry-distillation of the coal.

10. The method for processing waste plastic according to claim 8, wherein the waste plastic separated as the heavy fraction and the waste plastic agglomerated by the agglomerating are charged into an empty space in the coke oven including a bottom portion of the coke oven.

11. The method for processing waste plastic according to claim 8, wherein
coal is dry-distilled and the waste plastic charged into the coke oven is pyrolyzed in the coke oven,
the method further comprises mixing the waste plastic separated as the heavy fraction and the waste plastic agglomerated by the agglomerating into the coal, and
the coal mixed with the waste plastic is charged into the coke oven.

12. The method for processing waste plastic according to claim 8, wherein
coal is dry-distilled and the waste plastic charged into the coke oven is pyrolyzed in the coke oven,
the method further comprises mixing at least a portion of at least one of the waste plastic separated as the heavy fraction or the waste plastic agglomerated by the agglomerating into the coal,
the coal mixed with at least the portion of at least one of the waste plastic separated as the heavy fraction or the waste plastic agglomerated by the agglomerating is charged into the coke oven, and
the waste plastic not mixed into the coal, among the waste plastic separated as the heavy fraction and the waste plastic agglomerated by the agglomerating, is charged into an empty space in the coke oven formed above the coal mixed with at least the portion of at least one of the waste plastic separated as the heavy fraction or the waste plastic agglomerated by the agglomerating, during dry-distillation thereof.

13. The method for processing waste plastic according to any one of claims 8 to 12, wherein
the coke oven includes an ascension pipe through which furnace gas is discharged, and
the method further comprises: calculating a drag force acting on suspended matter in the ascension pipe based on measurement results of a gas temperature, a gas flow velocity, and a gas composition in the ascension pipe; and setting an airflow velocity in the pneumatic separation such that a drag force identical to that in the ascension pipe acts on the waste plastic.
